# EUROPÄISCHE PATENTSCHRIFT

(11) **EP 2 081 167 B1**
(45) Veröffentlichungstag und Bekanntmachung des Hinweises auf die Patenterteilung: **15.01.2014**
(21) Anmeldenummer: 08105760.6
(22) Anmeldetag: 11.11.2008
(51) Int. Cl.: G08G 1/16

(54) **Verfahren und Vorrichtung zur Erkennung und/oder Vermessung einer Parklücke**
Method and device for detecting and/or measuring a parking space
Procédé et dispositif de reconnaissance et/ou de mesure d'une place de stationnement

(30) Priorität: 16.01.2008 DE 102008004633
(43) Veröffentlichungstag der Anmeldung: 22.07.2009
(73) Patentinhaber: ROBERT BOSCH GMBH, 70442 Stuttgart (DE)
(72) Erfinder: Scherl, Michael, 74321 Bietigheim (DE); Zimmermann, Uwe, 71686 Remseck (DE)

(56) Entgegenhaltungen:
- EP-A1- 1 467 225
- DE-A1- 10 114 932
- DE-A1-102004 037 643
- US-A1- 2007 268 157

## Beschreibung

### Stand der Technik

Die Erfindung geht aus von einem Verfahren oder einer Vorrichtung nach dem Oberbegriff der unabhängigen Ansprüche.

Aus DE 101 14 932 A1 ist es bekannt, mit einem scannenden Entfernungssensor den Bereich seitlich eines Fahrzeugs in jeweils senkrecht zur Fahrtrichtung und zur Straßenoberfläche stehenden Flächen abzutasten. Aus den dadurch gewonnenen Tiefenprofilen entsteht bei einer Vorbeifahrt des Fahrzeugs an einem Umgebungsbereich ein dreidimensionales Abbild des Umgebungsbereichs, das beispielsweise für die Eignung als Parklücke ausgewertet werden kann. Ein weiterer Strahlengang dient zur Korrektur der durch die Eigenbewegung des Fahrzeugs verursachten dynamischen Variation der Ausrichtung des Abstandssensors.

Aus EP 1 467 225 A1 ist es bekannt, dreidimensionale Bilder der Umgebung eines Fahrzeugs, beispielsweise einer möglichen Parklücke, mit einer 3D-Kamera aufzunehmen. Diese Aufnahme kann während des Vorbeifahrens des Fahrzeugs an der potenziellen Parklücke oder auch, wenn dieses in unmittelbarer Nähe zu der potenziellen Parklücke hält, erfolgen.

### Offenbarung der Erfindung

### Vorteile der Erfindung

Das erfindungsgemäße Verfahren und die erfindungsgemäße Vorrichtung mit den Merkmalen der unabhängigen Ansprüche haben demgegenüber den Vorteil, dass die Erkennung und/oder Vermessung einer für das Fahrzeug geeigneten Parklücke bereits vor einer Vorbeifahrt an einer potenziellen Parklücke erfolgen kann. Dadurch ist keine zeitaufwändige Vorbeifahrt des Fahrzeugs an der potenziellen Parklücke mehr erforderlich.

Hierfür werden bereits vor der Vorbeifahrt, d. h., vorausschauend, dreidimensionale Daten der Umgebung des Fahrzeugs aufgenommen. Solche dreidimensionalen Daten können insbesondere mit einem Sensor, der horizontal und vertikal aufgelöste Tiefeninformationen liefert, aufgenommen werden. Diese Daten erlauben die Erkennung und Klassifikation von Objekten in der Umgebung des Fahrzeugs. Insbesondere können Objekte in solche, die Parklücken begrenzen, wie etwa stehende Fahrzeuge, Wände, Bordsteine und Markierungslinien, und solche, die Parklücken nicht begrenzen, wie etwa Getränkedosen oder auf die Fahrbahn aufgebrachte Parklücken-Nummern, eingeteilt werden. Kriterien, die eine automatische Klassifikation solcher Objekte ermöglichen, sind insbesondere die Höhe, die zusammenhängende Fläche und die Form solcher erkannten Objekte. Aus Größe, Form, relativer Position und Orientierung, sowie ggf. Art und Höhe der Begrenzungen können sodann die geometrischen Daten eines potenziell als Parklücke geeigneten Raumbereichs der Umgebung des Fahrzeugs ermittelt werden.

Auf diese Weise können alle Arten von Parklücken erkannt und/oder vermessen werden, insbesondere längs, quer und schräg zur Fahrtrichtung angeordnete Parklücken, ebenso wie Parklücken, die ganz oder teilweise von Linien begrenzt sind, wie beispielsweise Parkbuchten auf leeren Parkplätzen, oder auch Stellplätze in Garagen, Garageneinfahrten oder andere enge Durchfahrten, die hier ebenfalls unter "Parklücken" verstanden werden

Da dann, wenn beispielsweise zwischen nebeneinander oder hintereinander parkenden Fahrzeugen eine Lücke ausreichender Größe erkannt wird, diese häufig auch tatsächlich als Parklücke geeignet ist, ist es nicht unbedingt erforderlich, den betreffenden Raumbereich vollständig einsehen zu können; vielmehr kann es oft ausreichen, aus dem einsehbaren Bereich auf den nicht einsehbaren Bereich zu schließen. So kann es beispielsweise vorgesehen sein, bei einer Klassifikation von einem die Parklücke begrenzenden Objekt als Kraftfahrzeug dessen einsehbare Seite bzw. Seiten zu vermessen, daraus die Größe und Raumausrichtung dieses Objekts zu bestimmen und dadurch unter der Annahme einer im wesentlichen parallelen Anordnung der Fahrzeugseiten auf eine nicht einsehbare Seite des Kraftfahrzeugs zu schließen.

Ebenfalls kann es ausreichend sein, nur den Teil der Umgebung des Fahrzeugs aufzunehmen, der für die Erkennung einer potenziellen Parklücke und insbesondere für die Ermittlung der Länge einer Längsparklücke notwendig ist. Auf diese Weise wird der Fahrer zumindest in einem wesentlichen Teil seiner Wahrnehmung unterstützt, ohne dass nicht oder noch nicht relevante Hintergrundinformationen aufgenommen oder ausgewertet werden müssen. I. a. ist es jedoch vorteilhaft, wenn zu einem möglichst frühen Zeitpunkt möglichst vollständige Informationen über einen potenziell als Parklücke geeigneten Raum vorliegen.

Durch Vergleich der ermittelten Daten über den potenziell als Parklücke geeigneten Raumbereich mit den bekannten Daten des Fahrzeugs, die beispielsweise als rechnerisches Modell gespeichert sein können, kann festgestellt werden, ob dieser als Parklücke für das Fahrzeug geeignet ist. Hieraus kann eine entsprechende Information an den Fahrer generiert werden, oder es können die Daten auch einem weiteren System, beispielsweise einem teil- oder vollautomatischen Einparksystem, zur Verfügung stehen.

Gemäß einer bevorzugten Ausführungsform der Erfindung erfolgt die Ausgabe der Daten über den als Parklücke geeigneten Raumbereich so weit vor der Vorbeifahrt des Fahrzeugs an der potenziellen Parklücke, dass in häufig vorkommenden Einparksituationen ein Einparkvorgang in Bewegungsrichtung des Fahrzeugs möglich ist. Dadurch kann, wenn Lage, Größe, Geometrie und Erreichbarkeit der Parklücke ein Einparken ohne Fahrtrichtungswechsel erlauben, tatsächlich auch ein solcher, besonders einfacher und zeitsparender Einparkvorgang durchgeführt werden. Darüber hinaus ermöglicht es eine frühzeitige Information dem Fahrer, rechtzeitig Maßnahmen zum Ansteuern der Parklücke zu treffen, wie beispielsweise eine Beobachtung des Gegenverkehrs, ein Setzen der Fahrtrichtungsanzeiger usw. Der Zeitpunkt, zu dem in bevorzugter Weise die Erkennung und/oder Vermessung einer potenziellen Parklücke erfolgt und die entsprechenden Daten übermittelt werden, kann beispielsweise von der Größe des Fahrzeugs, dem Wendekreis des Fahrzeugs, vom seitlichen Abstand zu den Parklückenbegrenzungen und/oder von der Fahrzeuggeschwindigkeit abhängen. Wenn eine solche Parklücke erkannt worden ist, kann dies dem Fahrer angezeigt werden, der dann entscheiden kann, ob er in diese Parklücke einparken will oder nicht; ebenso kann auch ein teil- oder vollautomatisches Parkhilfesystem die betreffende Parklücke teilweise oder ganz selbstständig ansteuern.

In einer weiteren bevorzugten Ausführungsform der Erfindung werden die Parklücken begrenzenden Objekte in flache und nicht flache Objekte klassifiziert. Flache Objekte können zwar Parklücken begrenzen können, aber auch überfahren werden. Eine Parklücke, die bei gleichen Dimensionen nicht ansteuerbar wäre, wenn sie von hohen Objekten begrenzt wäre, kann daher geeignet sein, wenn sie von flachen Objekten begrenzt wird. Flache Objekte können beispielsweise Markierungen oder Linien auf dem Fahrbahnbelag sein, aber auch heller oder dunkler gefärbte Pflastersteine, die häufig zur Begrenzung von Parklücken eingesetzt werden, oder sehr niedrige Randsteine. Nicht flache Objekte sind beispielsweise Wände, Fahrzeuge, Poller, Bordsteine usw.

Die Unterscheidung von flachen und nicht flachen Objekten wird mit Hilfe der aufgenommenen dreidimensionalen Daten aufgrund der Höhe der Objekte getroffen. Flache Objekte werden insbesondere durch den Kontrast erkannt, wobei eine umso sicherere Erkennung möglich ist, je größer die Winkelauflösung der Helligkeitsdaten ist. Ebenso ist die Erkennung und/oder Vermessung von flachen Objekten erleichtert, wenn diese unter einem möglichst großen Raumwinkel erscheinen. Deshalb kann es vorteilhaft sein, einen, ggf. zusätzlichen, Sensor im oberen Bereich des Fahrzeugs anzuordnen, so dass flache Objekte auf der Fahrbahnoberfläche bei gegebener Entfernung unter einem möglichst großen Raumwinkel erscheinen. Ebenso kann es vorteilhaft sein, die Wellenlänge, mit der die dreidimensionalen Daten aufgenommen werden, so zu wählen, dass flache Objekte, insbesondere Fahrbahnmarkierungen, in einem möglichst großen Kontrast zur Fahrbahn erscheinen. Es kann aber auch eine Farbkamera vorgesehen sein, deren Bild mit den dreidimensionalen Daten korreliert wird, um flache Objekte aufgrund des Farbkontrasts sicherer zu erkennen.

Gemäß einer weiteren bevorzugten Ausführungsform der Erfindung werden die Parklücken begrenzenden Objekte in überragbare und nicht überragbare Objekte klassifiziert. Während nicht überragbare Objekte mit der Fahrzeugaußenkontur vermieden werden müssen, dürfen die überragbaren Objekte zwar nicht überfahren, aber beispielsweise mit dem Heck oder der Frontpartie des Fahrzeugs überragt werden. Parklücken, die bei Begrenzung durch nicht überragbare Objekte nicht geeignet wären, können somit geeignet sein, wenn sie durch überragbare Objekte begrenzt werden. Die Unterscheidung zwischen überragbaren und nicht überragbaren Objekten ist auch dann vorteilhaft, wenn keine vorausschauende Parklückenerkennung bzw. -vermessung erfolgt oder der Sensor, wie beispielsweise Radar- oder Ultraschallsensoren, flache Objekte nicht oder nur eingeschränkt erkennen kann. Für die Klassifikation als überragbar oder nicht überragbar sind die aus den dreidimensionalen Daten gewonnenen Höheninformationen mit den bekannten Daten des Fahrzeugs zu vergleichen, wobei die Fahrzeugdaten abhängig von der Beladung des Fahrzeugs modifiziert werden können. Außerdem können in vorteilhafter Weise dynamische, wie z. B. Durchfedern, und messungsbedingte Unsicherheiten bzw. Toleranzbereiche berücksichtigt werden.

Weiterhin kann es vorteilhaft sein, wenn die nicht überragbaren Objekte in solche klassifiziert werden, bei denen eine Kollision mit einer geöffneten Tür möglich ist oder nicht. Hierfür spielen die gemessene Höhe und die relative Position des betreffenden Objekts eine Rolle. Je nach Kollisionsgefahr kann ein Warnhinweis ausgegeben werden, der auch von der momentanen Öffnungsweite der Tür abhängig sein kann, oder auch eine Reaktion eines automatischen Systems erfolgen, wie etwa die Blockierung oder Abbremsung einer Tür.

Nach einem bevorzugten erfindungsgemäßen Verfahren werden aufgrund der aufgenommenen dreidimensionalen Daten und der Klassifikation der Objekte, die die potenzielle Parklücke begrenzen, mögliche Trajektorien für einen Einparkvorgang ermittelt. Diese Trajektorien können in bekannter Weise beispielsweise als Geraden-, Kreisbogen- oder Klothoidenstücke ermittelt werden und zur Bewertung der Eignung der Parklücke, aber auch im Rahmen eines Einparkhilfesystems zur Verfügung stehen. Dabei wird die Parklücke als geeignet eingestuft, wenn es unter Vorgabe beispielsweise bestimmter Mindestabstände von Hindernissen, einer bestimmten Maximalzahl von Richtungswechseln usw. geeignete Trajektorien zur Erreichung einer Position in der Parklücke gibt, andernfalls wird sie als ungeeignet eingestuft.

Besonders vorteilhaft ist es, wenn das erfindungsgemäße Verfahren für eine Anfahrt sowohl in Vorwärts- wie in Rückwärtsrichtung vorgesehen ist. So kann beispielsweise der Fahrer die Fahrtrichtung beim Einparkvorgang vorgeben - etwa, wenn das Rückwärtsparken an einer Hauswand wegen Verschmutzung durch Auspuffabgase verboten ist, oder wenn der Fahrer aus anderen Gründen, wie etwa der Zugänglichkeit des Kofferraums, in einer bestimmten Richtung einparken will. Diese Richtung kann beispielsweise auch aus der Stellung des Gangschaltungshebels erkannt werden. Ebenso könnte vorgesehen sein, dass aufgrund der Vermessung der potentiellen Parklücke automatisch ermittelt wird, in welcher Richtung in vorteilhafter Weise eingeparkt werden kann. So kann beispielsweise bei Längsparklücken ein Einparken in Vorwärtsrichtung bevorzugt sein, und dann, wenn dieses nicht oder nur mit mehreren Fahrtrichtungswechseln möglich ist, das Einparken in Rückwärtsrichtung gewählt werden. Ebenso kann auch bei Querparklücken automatisch oder je nach Vorgabe des Fahrers ein Einparken in Vorwärts- oder Rückwärtsrichtung unterstützt werden.

Da bei einer erfindungsgemäßen vorausschauenden Erkennung bzw. Vermessung einer potenziellen Parklücke häufig diese noch nicht vollständig einsehbar ist, kann in besonders bevorzugter Weise die Vermessung der Parklücke bei der Annäherung wiederholt bzw. kontinuierlich durchgeführt und entsprechende Daten zur Information des Fahrers und/oder an ein weiteres System, beispielsweise eine Einparkhilfe, weitergegeben werden. Wenn sich dabei herausstellt, dass die als für das Fahrzeug geeignet angesehene Parklücke doch nicht geeignet ist, weil sich beispielsweise ein Hindernis, das vorher durch ein anderes Fahrzeug verdeckt wurde, in der potenziellen Parklücke befindet, so kann dem Fahrer ein entsprechendes Signal angezeigt werden, oder ein möglicherweise begonnener automatischer Einparkvorgang kann automatisch abgebrochen werden. Ebenso kann die Genauigkeit der Vermessung und der Klassifikation der begrenzenden Objekte bei größerer Nähe zu diesen verbessert werden. Vorteilhafterweise wird die Vermessung der Parklücke während der Annäherung an die Parklücke und während des Einparkvorgangs kontinuierlich wiederholt, um möglichst frühzeitig und mit größtmöglicher Sicherheit festzustellen, ob die potenzielle Parklücke tatsächlich für das Fahrzeug geeignet ist.

Zusätzlich zur wiederholten Vermessung der Parklücke kann auch ein weiteres Sensorsystem zur Erfassung der Parklücke vorgesehen sein, das für eine Vermessung der Parklücke in der bei Annäherung an die Parklücke veränderten Blickrichtung ausgelegt ist. Insbesondere bei einem Einparkvorgang, der eine Richtungsumkehr erfordert, kann bei der dabei erfolgten Vorbeifahrt an der Parklücke eine zusätzliche, besonders vollständige Messung erfolgen.

Bei einer wiederholten Vermessung der Parklücke können auch durch Vergleich der zu einem Zeitpunkt ermittelten Daten mit früher ermittelten Daten Objekte, die sich bewegen, erkannt werden, beispielsweise Fußgänger oder fahrende Fahrzeuge. Hierfür kann die, beispielsweise über Odometriesensoren gemessene, Bewegung des Fahrzeugs herangezogen werden, um Objekte, deren Relativbewegung nicht der negativen Eigenbewegung des Fahrzeugs entspricht, sicher zu identifizieren. Wird ein sich bewegendes Objekt erkannt, das die Parklücke begrenzt, so kann ein besonderes Signal an den Fahrer und/oder an ein Einparkhilfesystem ausgegeben werden, um den Einsparkvorgang zumindest vorübergehend zu unterbrechen. Wenn das sich bewegende Objekt einen Mindestabstand erreicht hat, kann ein weiteres Signal erfolgen oder der unterbrochene Einparkvorgang automatisch wieder aufgenommen werden. Hierfür können auch die Bewegungsrichtung und -geschwindigkeit des Objekts bewertet werden.

Gemäß einer bevorzugten Ausführungsform der Erfindung werden neben der Tiefeninformation auch Intensitäts- bzw. Helligkeitsinformationen erfasst und ausgewertet. Hierdurch können beispielsweise Linien oder Sperrflächen auf der Fahrbahnoberfläche besser erkannt werden, es kann aber auch durch Auswertung der Reflektanz- bzw. Grauwertdaten die Sicherheit und Genauigkeit der Objekterkennung und -vermessung verbessert werden. Darüber hinaus sind durch Erhöhung der Redundanz beispielsweise Aussagen über die Nutzbarkeit der Tiefeninformationen möglich, etwa bei schwachem Signal oder bei Fehlern des Sensors. Ebenso können beispielsweise Reflexe erkannt werden, die ebenfalls Aussagen über die Form der detektierten Objekte zulassen.

Eine erfindungsgemäße Vorrichtung zur Erkennung und/oder Vermessung einer Parklücke enthält mindestens einen mit dem Fahrzeug mitbeweglichen Sensor zur Erfassung von dreidimensionalen Daten einer Umgebung des Fahrzeugs in einer im wesentlichen horizontalen Richtung und mindestens eine Auswerteeinrichtung zur Auswertung der von dem mindestens einen Sensor gelieferten Daten. Dabei ist der eine Sensor, bezogen auf eine Fahrtrichtung des Fahrzeugs, zur vorausschauenden Erfassung von dreidimensionalen Daten angeordnet und die Auswerteeinrichtung ist dafür vorgesehen, bereits vor einer Vorbeifahrt des Fahrzeugs an einer potenziellen Parklücke diese zu erkennen bzw. zu vermessen. Empfindlichkeit, Reichweite, Öffnungswinkel sowie horizontale und vertikale Auflösung des Sensors können in bevorzugter Weise so gewählt sein, dass eine Erkennung und/oder Vermessung einer potenziellen Parklücke so frühzeitig möglich ist, dass bei Parklücken üblicher Größe ein Einparken ohne Richtungswechsel möglich ist. Abhängig von der Zykluszeit kann eine Maximalgeschwindigkeit für Parkmanöver vorgegeben sein; bei einer kürzeren Zykluszeit kann durch eine höhere Anzahl von Messungen eine höhere Genauigkeit erreicht werden.

Es können auch mehrere Sensoren zur Erfassung unterschiedlicher Bereiche, zur Erhöhung der Genauigkeit, zur Vermeidung von Abschattungen oder zur Erfassung unterschiedlicher Arten von Parklücken vorgesehen sein. So kann beispielsweise ein Sensor im vorderen Bereich des Fahrzeugs, beispielsweise auf Stoßstangenhöhe oder hinter der Frontscheibe, zur vorausschauenden Erfassung potenzieller Parklücken bei Vorwärtsfahrt angeordnet sein und ein weiterer Sensor im Heckbereich auf Stoßstangenhöhe oder hinter der Heckscheibe zur vorausschauenden Erfassung bei Rückwärtsfahrt. Ebenso können Sensoren auf der rechten oder linken Fahrzeugseite angeordnet sein oder ein oder mehrere Sensoren im Dachbereich.

Gemäß einer bevorzugten Ausführungsform der Erfindung arbeitet der mindestens eine Sensor als Range Imager bzw. Photon Mixing Device (PMD) oder als TOF (Time of Flight) -Array. Solche Sensoren sind kostengünstig erhältlich. Gemäß einer anderen bevorzugten Ausführungsform der Erfindung arbeitet der mindestens eine Sensor als Lidar-Scanner oder als 3D-Radar. In allen diesen Fällen erlaubt die aktive Beleuchtung eine Verwendung auch unter schlechten Beleuchtungsverhältnissen, z. B. nachts, außerdem spielen optische Einschränkungen, wie Schattenwurf bei ungünstiger Sonneneinstrahlung oder Kontrastschwäche zwischen Vorder- und Hintergrund, keine Rolle. Insbesondere kann der Sensor im NIR-Bereich arbeiten, der für das menschliche Auge unsichtbar ist, wobei die Sensor- und Empfängertechnologie ausgereift und robust und leicht verfügbar ist. Ein Lidar-Scanner hat darüber hinaus den besonderen Vorteil der Mehrzielfähigkeit, d. h., auch bei Nebel oder Regen erhält man hierdurch genau auswertbare Tiefeninformationen.

In bevorzugter Weise liefert der mindestens eine Sensor neben der räumlich aufgelösten Tiefeninformation auch einem Videobild entsprechende Reflektanz- bzw. Intensitätsinformationen. Die von dem mindestens einen Sensor gelieferten Daten können auch für andere Funktionen und Systeme, wie etwa Kollisionswarnsysteme, Abstandsregelung, Straßenzustanderkennung, automatische Fahrzeugführung oder als Rückfahrkamera zur Verfügung stehen.

Der Auswerteeinrichtung können in vorteilhafter Weise Speichermittel zugeordnet sein, in denen ein rechnerisches Modell des Fahrzeugs gespeichert ist und zur Ermittlung der Eignung einer potenziellen Parklücke und/oder zur Berechnung von Trajektorien des Fahrzeugs beim Einparkvorgang in die Parklücke zur Verfügung steht. Es können auch Speichermittel vorgesehen sein zur Speicherung der von dem Sensor gelieferten Daten. Bei einer wiederholten bzw. kontinuierlichen Messung können die gelieferten Daten, zusammen mit den bereits vorher gespeicherten, wiederholt bzw. kontinuierlich ausgewertet werden, um die Genauigkeit und Verlässlichkeit der Daten zu steigern. Wenn dann mit hinreichender Sicherheit eine Parklücke erkannt worden ist, kann der Fahrer durch ein Signal darauf hingewiesen werden.

Ebenso können dreidimensionale Daten der Umgebung des Fahrzeugs zumindest für den gesamten Einparkvorgang gespeichert werden, um bewegliche Objekte erkennen zu können, aber auch, um unabhängig von Abstandssensoren eine Kollisionswarnung bei einem manuellen oder teilweise automatischen Einparkvorgang zu erzeugen.

Zur Vereinfachung der Auswertung der dreidimensionalen Daten und insbesondere zur sichereren Erkennung beweglicher Objekte kann ein System zur Erfassung der Bewegung des Fahrzeugs vorgesehen sein. In bevorzugter Weise werden hierfür Raddrehzahl- bzw. Odometriesensoren verwendet, die häufig als Teil anderer Systeme, beispielsweise ABS oder ASR, bereits vorhanden sind.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Einparksituation bei einer Längsparklücke;
- Figur 2: eine weitere Einparksituation bei einer Längsparklücke;
- Figur 3: eine Einparksituation bei einer Querparklücke;
- Figur 4: ein Beispiel für die aufgenommenen dreidimensionale Daten einer Querparklücke in dreidimensionaler Darstellung;
- Figur 5: eine Situation bei durch Linien begrenzten Parkbuchten auf einem Parkplatz;
- Figur 6: die Aufnahme von 3D-Daten bei der Annäherung an eine Parklücke;
- Figur 7: einen Einparkvorgang in eine Längsparklücke mit hoher vorderer und überragbarer hinterer und seitlicher Begrenzung.

### Ausführungsformen der Erfindung

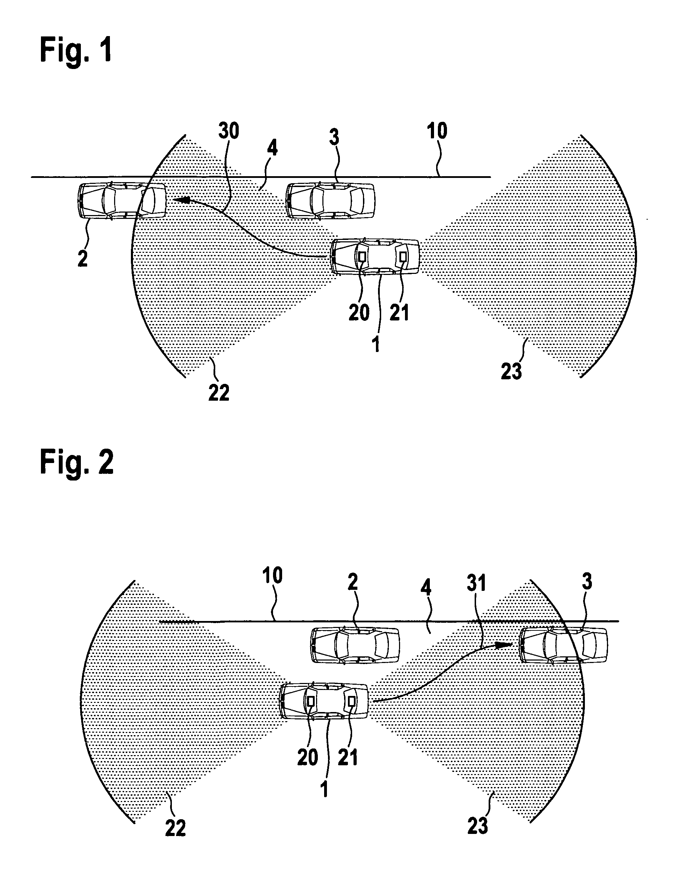

Eine Situation, in der das erfindungsgemäße Verfahren und die erfindungsgemäße Vorrichtung bei der Anfahrt auf eine Längsparklücke vorteilhaft einsetzbar sind, ist in Fig. 1 in Draufsicht (aus der Vogelperspektive) dargestellt. Ein mit der erfindungsgemäßen Vorrichtung ausgerüstetes Fahrzeug 1 fährt an einer Reihe von am Fahrbahnrand, gegeben durch einen Bordstein 10, abgestellten Fahrzeugen 2, 3 entlang. Noch bevor das Fahrzeug 1 das parkende Fahrzeug 3 passiert hat, befinden sich die Fahrzeuge 2 und 3 bereits im Detektionsbereich 22 eines nach vorne gerichteten 3D-Sensors 20. Dieser ist in diesem Ausführungsbeispiel hinter der Frontscheibe des Fahrzeugs 1 angebracht und erfasst die Umgebung des Fahrzeugs 1 nach vorne und schräg nach vorne. Ein weiterer 3D-Sensor 21 befindet sich hinter der Heckscheibe des Fahrzeugs 1, mit einem nach hinten gerichteten Detektionsbereich 23. Zwischen den parkenden Fahrzeugen 2 und 3 befindet sich eine potenzielle Parklücke 4, die über eine symbolisch dargestellte Trajektorie 30 aus der Vorwärtsbewegung des Fahrzeugs 1 ohne Richtungswechsel angesteuert werden könnte.

Eine weitere Situation ist in Fig. 2 dargestellt. Ein mit der erfindungsgemäßen Vorrichtung ausgerüstetes Fahrzeug 1 fährt in Rückwärtsrichtung an einer Reihe von am Bordstein 10 geparkten Fahrzeugen 2, 3 entlang. Die Fahrzeuge 2 und 3 befinden sich im Detektionsbereich 23 eines nach hinten gerichteten 3D-Sensors 21, der hinter der Heckscheibe des Fahrzeugs 1 angebracht ist. Zwischen den parkenden Fahrzeugen 2 und 3 befindet sich eine potenzielle Parklücke 4, die über eine symbolisch dargestellte Trajektorie 31 aus der Rückwärtsbewegung des Fahrzeugs 1 ohne Richtungswechsel angesteuert werden könnte.

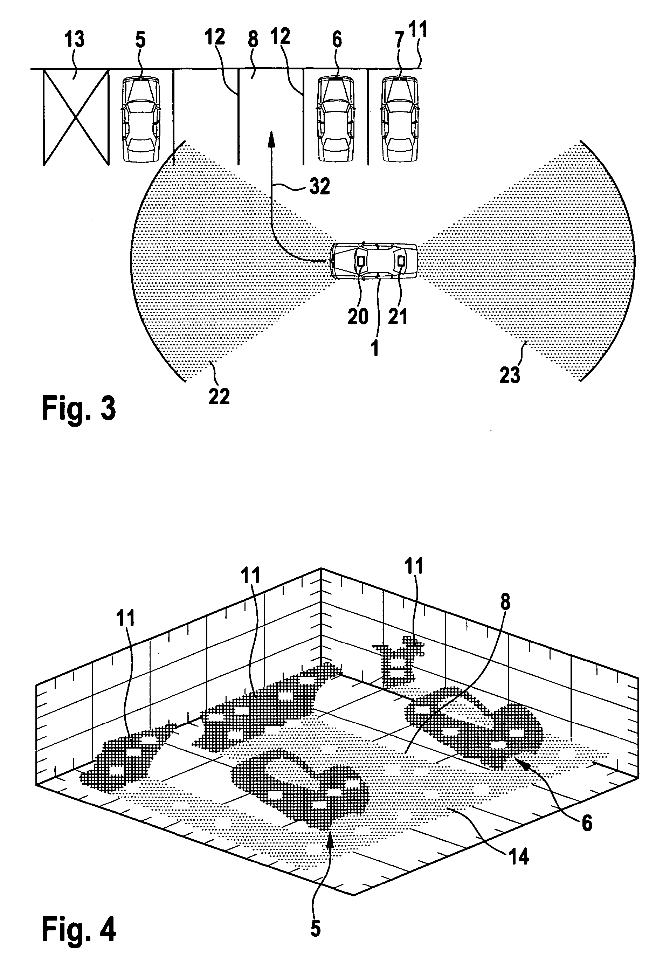

In der in Fig. 3 dargestellten weiteren Situation fährt das Fahrzeug 1 an durch Linien 12 abgegrenzten Parkbuchten, in denen teilweise Fahrzeuge 5, 6, 7 abgestellt sind, sowie ggf. Sperrflächen 13 entlang. Die Linien 12 und die abgestellten Fahrzeuge gelangen nach und nach in den Detektionsbereich 22 des nach vorne gerichteten 3D-Sensors 20. Die durch die Linien 12 und den Fahrbahnrand, beispielsweise eine Wand 11, begrenzte Parkbucht 8 kann als Querparklücke auf einer Trajektorie 32 vorwärts angesteuert werden. Wie in Fig. 3 dargestellt, kann der Detektionsbereich der 3D-Sensoren 20, 21 so gewählt sein, dass zunächst nur die für die Erkennung von Parklücken wesentlichen Bereiche der Umgebung des Fahrzeugs 1 aufgenommen werden können, nicht oder noch nicht relevante Hintergrundinformationen jedoch nicht.

In den dargestellten Situationen werden jeweils dreidimensionale Daten der Umgebung des Fahrzeugs 1 aufgenommen. Solche Daten sind für eine Querparklücke, die seitlich von 2 Fahrzeugen 5, 6 und nach vorne durch eine Wand 11 begrenzt ist, in Fig. 4 in dreidimensionaler Darstellung beispielhaft gezeigt. Die dreidimensionalen Daten zeigen die im Wesentlichen horizontale Fahrbahnoberfläche 14 (in Fig. 4 durch hellere Punkte bzw. Flächen dargestellt) sowie demgegenüber herausgehobene Objekte (durch dunklere Punkte bzw. Flächen dargestellt), hier die Fahrzeuge 5, 6 und die Wand 11. Aufgrund ihrer Position, Geometrie und Höhe werden die Objekte 5, 6, 11 als Parklücken begrenzend klassifiziert, so dass der Zwischenraum nach Vergleich mit den geometrischen Daten des Fahrzeugs 1 als potenzielle Querparklücke 8 erkannt wird.

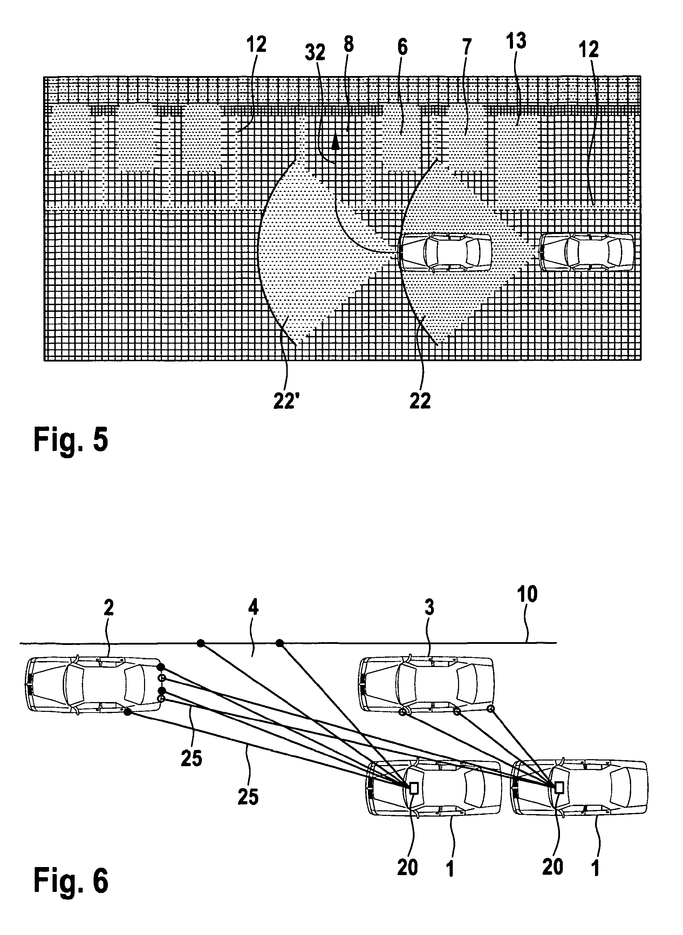

Zusätzlich können durch Auswertung der Intensitätsinformationen des 3D-Sensors, die beispielhaft in Fig. 5 gezeigt sind, auch flache Objekte, insbesondere Linien 12 oder Sperrflächen 13 erkannt werden. Dabei werden Linien nach ihrer Form und Größe klassifiziert, Sperrflächen werden durch mehrere parallele Linien mit geringem Abstand, gekreuzte Linien, breite Linien o. ä. erkannt.

Fig. 5 zeigt auch, dass, wenn an einer ersten Position des Fahrzeugs 1 noch keine Parklücke im Detektionsbereich 22 des Sensors liegt, das Fahrzeug zu einer zweiten Position bewegt werden kann, wo nun eine potenzielle Parklücke 8 im Detektionsbereich 22' des Sensors liegt und erkannt wird. Ist diese nach der Auswertung der 3D-Daten und Vergleich mit den in einem Speicher gespeicherten Daten des Fahrzeugs für das Fahrzeug geeignet und führt auch eine mögliche Einparktrajektorie 32 das Fahrzeug 1 hinein, so kann ein Signal an den Fahrer ausgegeben oder auch ein automatischer Einparkvorgang eingeleitet werden. Aufgrund des hohen Objekts 6 kann beim Öffnen einer Tür auf der betreffenden Seite eine Kollisionsgefahr bestehen. In diesem Fall kann beispielsweise eine entsprechende Warnung ausgegeben werden, oder es kann von vornherein ein größerer Abstand zum hohen Objekt 6 eingeplant werden.

Wie in Fig. 6 gezeigt, können bei der Weiterbewegung des Fahrzeugs 1 und auch beim Einparkvorgang wiederholt dreidimensionale Daten der potenziellen Parklücke 4 aufgenommen werden. Hierbei werden mit der Winkelauflösung des 3D-Sensors jeweils Abstands- bzw. Tiefeninformationen aufgenommen (in Fig. 6 durch die Länge der Sichtlinien 25 zum jeweiligen Objekt 2, 3, 10 dargestellt), um ein dreidimensionales Bild der Szene zu konstruieren, die Position und die Abmessungen der Parklückenbegrenzungen zu ermitteln und eine Parklückenbeschreibung zu erstellen. Diese wird unter Berücksichtigung der Bewegung des Fahrzeugs 1 bei der weiteren Annäherung, ggf. und auch noch während des Einparkvorgangs, sukzessive verfeinert. Sobald genügend Daten vorliegen, werden die für einen Einparkvorgang relevanten Parkraumparameter berechnet und ggf. die Unterstützung eines Einparkvorgangs eingeleitet.

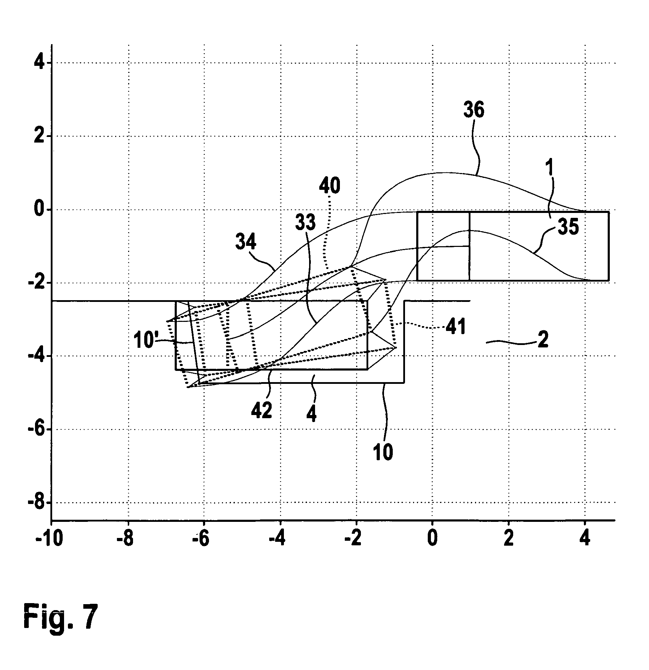

Fig. 7 zeigt beispielhaft die Trajektorienplanung für einen Einparkvorgang in eine Längsparklücke 4. Das Fahrzeug 1 befindet sich, aus einer Vorwärts- oder Rückwärtsbewegung kommend, an einer Position neben dem Fahrzeug 2, von wo aus rückwärts in die Parklücke eingeparkt werden kann. Die Parklücke 4 wird vorne durch ein Fahrzeug 2, seitlich durch einen Bordstein 10 und hinten durch einen schräg verlaufenden Bordstein 10' begrenzt. Während das Fahrzeug 2 ein nicht überragbares Objekt darstellt, wird der Bordstein als nicht-flaches, überragbares Objekt klassifiziert. Aufgrund einer Vorausplanung möglicher Trajektorien kann entschieden werden, ob ein Einparkvorgang tatsächlich möglich ist. Die dargestellten Trajektorien 33, 34, 35, 36 der 4 Ecken des Fahrzeugs 1 zeigen, dass beim Einparkvorgang die Ecken des Fahrzeugs 1 über den Bordstein hinausragen können. Andererseits müssen die Trajektorien der Räder (nicht dargestellt) stets einen Sicherheitsabstand vom Bordstein 10, 10' einhalten. Die Fahrzeugaußenkontur 40, 41, 42, die jeweils für die Endpunkte der Einparkzüge eingezeichnet ist, muss ebenfalls stets einen Mindestabstand von dem hohen Hindernis 2 einhalten. Die Abbildung zeigt, dass eine Parklücke, die mit einer hohen hinteren Begrenzung zu klein für das Fahrzeug 1 wäre, im Fall einer überragbaren hinteren Begrenzung ausreichend groß und auch mit einer akzeptablen Zahl von Richtungswechseln erreichbar ist und als Parklücke angeboten werden kann.

## Patentansprüche

1. Verfahren zur Erkennung und/oder Vermessung einer Parklücke, enthaltend folgende Schritte:
- Erfassung von dreidimensionalen Daten einer Umgebung eines Fahrzeugs,
- Klassifikation von Objekten in der Umgebung des Fahrzeugs in Parklücken begrenzende und nicht Parklücken begrenzende Objekte,
- Ermittlung eines für das Fahrzeug als Parklücke geeigneten Raumbereichs der Umgebung des Fahrzeugs und
- Ausgabe von Daten über den als Parklücke geeigneten Raumbereich an den Fahrer oder an ein übergeordnetes System,
**dadurch gekennzeichnet, dass**
- die Ausgabe der Daten über den als Parklücke geeigneten Raumbereich bereits vor einer Vorbeifahrt des Fahrzeugs an dem Raumbereich erfolgt, wobei zur Ermittlung des für das Fahrzeug als Parklücke geeigneten Raumbereiches aus einem einsehbaren Bereich der Parklücke auf einen nicht einsehbaren Bereich der Parklücke geschlossen wird.

2. Verfahren nach Anspruch 1, **dadurch gekennzeichnet, dass** die Ausgabe der Daten über den als Parklücke geeigneten Raumbereich so weit vor der Vorbeifahrt des Fahrzeugs an dem Raumbereich erfolgt, dass ein Einparkvorgang in Bewegungsrichtung des Fahrzeugs möglich ist.

3. Verfahren nach Anspruch 1 oder 2 oder nach dem Oberbegriff von Anspruch 1, **dadurch gekennzeichnet, dass** die Parklücken begrenzenden Objekte in flache und nicht flache Objekte klassifiziert werden.

4. Verfahren nach einem der Ansprüche 1 bis 3 oder nach dem Oberbegriff von Anspruch 1, **dadurch gekennzeichnet, dass** die Parklücken begrenzenden Objekte in überragbare und nicht überragbare Objekte klassifiziert werden.

5. Verfahren nach Anspruch 3 oder 4, **dadurch gekennzeichnet, dass** aufgrund der dreidimensionalen Daten und der Klassifikation der Parklücken begrenzenden Objekte mögliche Trajektorien für einen Einparkvorgang in die für das Fahrzeug geeignete Parklücke ermittelt werden.

6. Verfahren nach einem der Ansprüche 1 bis 5, **dadurch gekennzeichnet, dass** die Erkennung und/oder Vermessung einer Parklücke sowohl bei Vorwärts- als auch bei Rückwärts-Anfahrt an die Parklücke möglich ist.

7. Verfahren nach einem der Ansprüche 1 bis 6, **dadurch gekennzeichnet, dass** die Daten über den als Parklücke geeigneten Raumbereich wiederholt ermittelt und an den Fahrer oder an ein übergeordnetes System ausgegeben werden.

8. Verfahren nach einem der Ansprüche 1 bis 7, **dadurch gekennzeichnet, dass** zusätzlich zu den dreidimensionalen Daten räumlich aufgelöste Helligkeitsinformationen erfasst und ausgewertet werden.

9. Vorrichtung zur Erkennung und/oder Vermessung einer Parklücke, mit
- mindestens einem mit dem Fahrzeug mitbeweglichen Sensor zur Erfassung von dreidimensionalen Daten einer Umgebung des Fahrzeugs in einer horizontalen Richtung und
- mindestens einer Auswerteeinrichtung zur Auswertung der von dem mindestens einen Sensor gelieferten Daten,
**dadurch gekennzeichnet, dass**
- der mindestens eine Sensor zur vorausschauenden Erfassung von dreidimensionalen Daten angeordnet ist und
- die Auswerteeinrichtung zur Erkennung und/oder Vermessung einer für das Fahrzeug geeigneten Parklücke bereits vor einer Vorbeifahrt des Fahrzeugs an der Parklücke ausgebildet ist, wobei zur Ermittlung des für das Fahrzeug als Parklücke geeigneten Raumbereiches aus einem einsehbaren Bereich der Parklücke auf einen nicht einsehbaren Bereich der Parklücke geschlossen wird.

10. Vorrichtung nach Anspruch 9, **dadurch gekennzeichnet, dass** der mindestens eine Sensor ein Range Imager, ein TOF-Array, ein Lidar-Scanner oder ein 3D-Radar ist.

## Claims

1. Method for detecting and/or measuring a parking space, containing the following steps:
- acquiring three-dimensional data relating to an area surrounding a vehicle,
- classifying objects in the area surrounding the vehicle as objects which bound parking spaces and objects which do not bound parking spaces,
- determining a spatial region of the area surrounding the vehicle which is suitable as a parking space for the vehicle, and
- outputting data relating to the spatial region suitable as the parking space to the driver or to a superordinate system,
**characterized in that**
- the data relating to the spatial region suitable as the parking space are output already before the vehicle passes the spatial region, wherein, in order to determine the spatial region suitable as a parking space for the vehicle, a visible region of the parking space is used to infer a region of the parking space which is not visible.

2. Method according to Claim 1, **characterized in that** the data relating to the spatial region suitable as the parking space are output so long before the vehicle passes the spatial region that a parking process in the direction of movement of the vehicle is possible.

3. Method according to Claim 1 or 2 or according to the precharacterizing clause of Claim 1, **characterized in that** the objects which bound parking spaces are classified as flat objects and objects which are not flat.

4. Method according to one of Claims 1 to 3 or according to the precharacterizing clause of Claim 1, **characterized in that** the objects which bound parking spaces are classified as objects which can project and objects which cannot project.

5. Method according to Claim 3 or 4, **characterized in that** possible trajectories for a process for parking in the parking space suitable for the vehicle are determined on the basis of the three-dimensional data and the classification of the objects which bound parking spaces.

6. Method according to one of Claims 1 to 5, **characterized in that** a parking space can be detected and/or measured both during a forward approach and a reverse approach to the parking space.

7. Method according to one of Claims 1 to 6, **characterized in that** the data relating to the spatial region suitable as the parking space are repeatedly determined and output to the driver or to a superordinate system.

8. Method according to one of Claims 1 to 7, **characterized in that** spatially resolved brightness information is acquired and evaluated in addition to the three-dimensional data.

9. Apparatus for detecting and/or measuring a parking space, having
- at least one sensor which can be moved with the vehicle and is intended to acquire three-dimensional data relating to an area surrounding the vehicle in a horizontal direction, and
- at least one evaluation device for evaluating the data provided by the at least one sensor,
**characterized in that**
- the at least one sensor is arranged to acquire three-dimensional data in an anticipatory manner, and
- the evaluation device is designed to detect and/or measure a parking space suitable for the vehicle already before the vehicle passes the parking space, wherein, in order to determine the spatial region suitable as a parking space for the vehicle, a visible region of the parking space is used to infer a region of the parking space which is not visible.

10. Apparatus according to Claim 9, **characterized in that** the at least one sensor is a range imager, a TOF array, a lidar scanner or a 3D radar.

## Revendications

1. Procédé de reconnaissance et/ou de mesure d'une place de stationnement, comprenant les étapes suivantes :
- détection de données tridimensionnelles relatives à l'environnement d'un véhicule ;
- classification des objets dans l'environnement du véhicule en objets délimitant les places de stationnement et en objets ne délimitant pas les places de stationnement ;
- calcul d'une région dans l'espace de l'environnement du véhicule adaptée pour servir de place de stationnement au véhicule ; et
- envoi au conducteur ou à un système hiérarchiquement supérieur des données relatives à la région dans l'espace adaptée comme place de stationnement ;
**caractérisé en ce que** :
- l'envoi des données relatives à la région dans l'espace adaptée comme place de stationnement se produit déjà avant un passage du véhicule au niveau de ladite région dans l'espace, une décision étant prise à partir d'une région visible de la place de stationnement pour en déduire la présence d'une région non visible de la place de stationnement en vue de déterminer la région dans l'espace adaptée comme place de stationnement pour le véhicule automobile.

2. Procédé selon la revendication 1, **caractérisé en ce que** l'envoi des données concernant la région dans l'espace adaptée comme place de stationnement est possible tant que le passage du véhicule au niveau de la région dans l'espace permet un processus de stationnement dans la direction de déplacement du véhicule.

3. Procédé selon la revendication 1 ou 2 ou selon le préambule de la revendication 1, **caractérisé en ce que** les objets délimitant les places de stationnement sont classés en objets plats et non plats.

4. Procédé selon l'une quelconque des revendications 1 à 3 ou selon le préambule de la revendication 1, **caractérisé en ce que** les objets délimitant les places de stationnement sont classés en objets saillants et non saillants.

5. Procédé selon la revendication 3 ou 4, **caractérisé en ce que** sur la base des données tridimensionnelles et du classement des objets délimitant les places de stationnement, des trajectoires possibles sont calculées pour un processus de stationnement dans la place de stationnement adaptée au véhicule.

6. Procédé selon l'une quelconque des revendications 1 à 5, **caractérisé en ce que** la reconnaissance et/ou la mesure d'une place de stationnement est possible tant dans le cadre d'une marche avant que d'une marche arrière réalisées au niveau de la place de stationnement.

7. Procédé selon l'une quelconque des revendications 1 à 6, **caractérisé en ce que** les données concernant la région dans l'espace adaptée comme place de stationnement sont calculées de façon répétée et transmises au conducteur ou à un système hiérarchiquement supérieur.

8. Procédé selon l'une quelconque des revendications 1 à 7, **caractérisé en ce qu'**en sus des données tridimensionnelles, des informations relatives à la clarté dispersée dans l'espace sont détectées et analysées.

9. Dispositif de reconnaissance et/ou de mesure d'une place de stationnement, avec :
- au moins un capteur embarqué dans le véhicule permettant de détecter des données tridimensionnelles relatives à un environnement du véhicule dans une direction horizontale ; et
- au moins un dispositif d'analyse permettant d'analyser les données fournies par l'au moins un capteur ;
**caractérisé en ce que** :
- l'au moins un capteur est disposé de façon à pouvoir détecter par anticipation les données tridimensionnelles ; et
- le dispositif d'analyse est conçu pour détecter et/ou mesurer une place de stationnement adaptée au véhicule en amont d'un passage du véhicule au niveau de la place de stationnement, une décision étant prise à partir d'une région visible de la place de stationnement pour en déduire la présence d'une région non visible de la place de stationnement en vue de déterminer la région dans l'espace adaptée comme place de stationnement pour le véhicule automobile.

10. Dispositif selon la revendication 9, **caractérisé en ce que** l'au moins un capteur est un système d'imagerie télémétrique, un système TOF, un système de balayage de type Lidar ou un radar 3D.
